# EUROPEAN PATENT APPLICATION

(11) **EP 0 533 063 A1**
(43) Date of publication of application: **24.03.1993**
(21) Application number: 92115553.7
(22) Date of filing: 11.09.1992
(51) Int. Cl.: F16K 17/34

(54) **Automatic flow limiting device particularly for containers of pressurized fluids**

(30) Priority: 20.09.1991 IT MI912497
(71) Applicant: O.ME.CA. S.p.A., I-25010 Ponte S. Marco di Calcinato (Brescia) (IT)
(72) Inventor: Cavagna, Carlo, I-25010 Calcinatello (Brescia) (IT)
(74) Representative: Modiano, Guido, Dr.-Ing.

(57) **Abstract**

Automatic flow limiting device particularly for containers of pressurized fluids, whose peculiarity consists of the fact that it comprises cutoff means (6) which are connected monolithically, by means of extendable flaps (1,2), to locking means (8) for locking the device to a fluid inflow port defined on a manual stopcock. The cutoff and locking means are fixed to the cock.

## Description

The present invention relates to an automatic flow limiting device particularly for containers of pressurized fluids.

In containers of pressurized fluids, such as gas cylinders and the like, there is an important technical problem related to the automatic closure of the cylinder in case of violent leakages of fluid, usually in the gaseous state, from said cylinder.

Various solutions have been proposed on the subject, but each one has various problems. A type of popular solution which is currently present on the market has, inside the cock for adjusting the flow of outgoing fluid, a gasket provided with a lateral slit through which the fluid or gas can flow in normal operating conditions.

If a sudden leak occurs, the pressure of the fluid, which acts on a movable portion of the gasket, closes said slit, preventing the leak of fluid from continuing. A problem which can often occur is indeed related to the shape of the gasket.

If the pressure is extremely high, the compression of the movable portion in fact causes its deformation, thus causing the permanent occlusion of said slot and therefore requiring the replacement of the entire manual stopcock.

The aim of the present invention is to eliminate or substantially reduce the problems described above in known types of flow limiters by providing an automatic flow limiting device, particularly for containers of pressurized fluids, which is particularly reliable in use.

Within the scope of the above aim, an object of the present invention is to provide a device which has limited dimensions and which reacts to relatively small stresses.

Not least object of the present invention is to provide a device which is relatively easy to manufacture and at competitive costs.

This aim, the objects mentioned and others which will become apparent hereinafter are achieved by an automatic flow limiting device particularly for containers of pressurized fluids, characterized in that it comprises cutoff means which are connected monolithically, by means of extendable flaps, to locking means for locking said device to a fluid inflow port defined on a manual stopcock, said cutoff and locking means being fixed to said cock by means of a fixing ring or of another suitable means.

Further characteristics and advantages of the invention will become apparent from the following detailed description of a preferred but not exclusive embodiment of an automatic flow limiting device particularly for containers of pressurized fluids according to the invention, illustrated only by way of non-limitative example in the accompanying drawings, wherein:
figure 1 is a partially sectional front elevation view of a manual stopcock equipped with a device according to the invention;
figure 2 is a plan view of the device according to the invention;

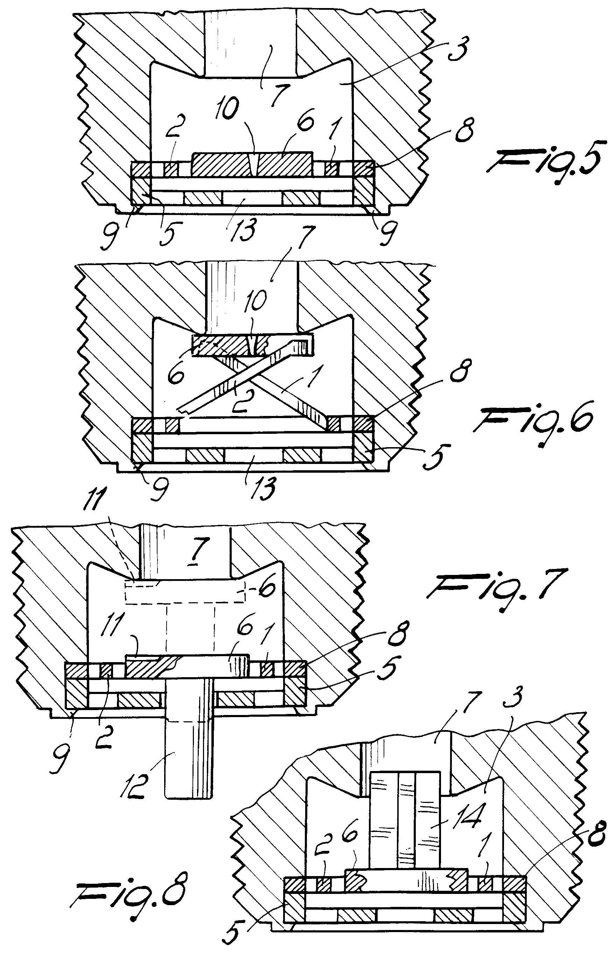

figure 3 is a perspective view of the device in extended position;
figure 4 is a perspective view of a locking ring of the device according to the invention;
figure 5 is an enlarged sectional view of the fluid inflow port with the device in idle position;
figure 6 is an enlarged sectional view of the fluid inflow port with the device in the position for closing the inner duct;
figure 7 is an enlarged sectional view of the fluid inflow port with the device provided with a first type of guiding means; and
figure 8 is an enlarged sectional view of the fluid inflow port with the device provided with a second type of guiding means.

With reference to the above figures, an automatic flow limiting device particularly for containers of pressurized fluids comprises sealing or cutoff means which are connected monolithically, by means of extendable flaps 1 and 2, to means for locking the device to a fluid inflow port, designated by the reference numeral 3, provided on a manual stopcock 4. The cutoff and locking means are fixed to the stopcock 4 by a fixing ring 5.

The cutoff means comprise a disk 6 whose diameter is larger than the diameter of an internal duct 7 of the fluid inflow port 3.

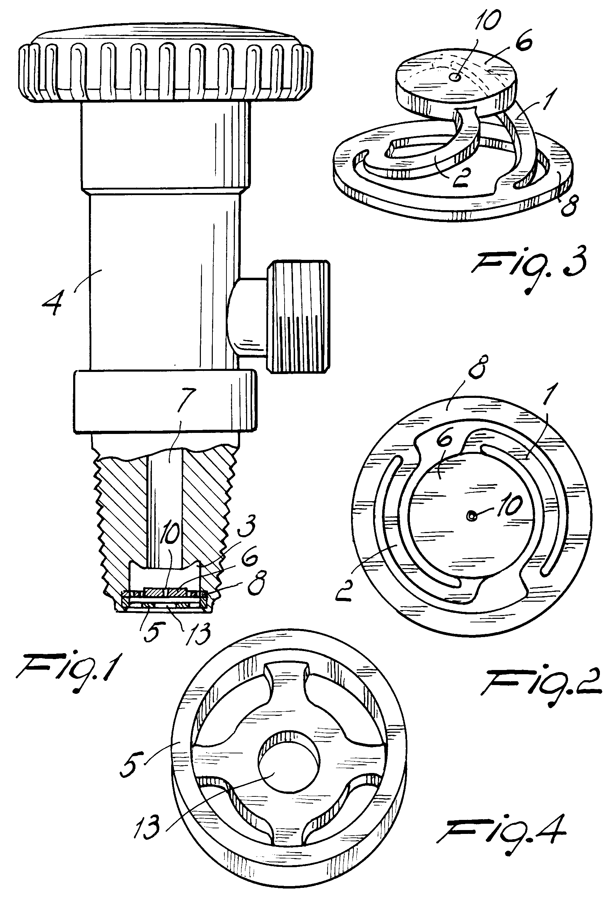

The locking means comprise a ring 8 from whose internal perimeter the flaps 1 and 2 for connection to the disk 6 protrude. The disk 6, the ring 8 and the extendable flaps 1 and 2 may be co-planar in their idle position, as more clearly shown in figures 1 and 5.

The fixing ring 5 supports the locking ring 8 in the inflow port 3 of the cock 4 and can be fixed by bending edges 9 of the inflow port 3.

Fluid bleeding means are defined in the disk 6 and balance, in closure position, the pressure between the inside of the container and the duct 7 of the inflow port 3.

The bleeding means may comprise a through hole 10 defined in the disk 6, as more clearly shown in figures 5 and 6, or a recess 11 which connects the inner duct 7 to the container through the port 3 and is defined on a portion of the disk 6 which abuts against edges of the inner duct 7.

In alternative embodiments, the disk 6 may have means for guiding it along preset paths, as shown in figures 7 and 8. Said guiding means can be constituted by a first cylinder 12 which extends from the disk 6 and passes through an opening 13 defined in the fixing ring 5, or by a second cylinder 14 which extends from the disk 6 and partially loosely enters the inner duct 7.

Briefly, operation is as follows: in case of normal operation (figure 5), the disk 6 remains co-planar with respect to the ring 8 and the flaps 1 and 2. If a greater-than-allowed escape of fluid occurs, the disk 6 is pushed by the differential pressure of the container toward the duct 7, thereby closing it. If the cock 4 is then closed, thus eliminating the leak, the bleeding of fluid allows to rebalance the pressure between the inside of the container and the duct 7, thus causing the descent of said disk to its original idle position.

It has been observed that the device according to the invention achieves the intended aim and objects, in that it constitutes an automatic and reversible closure in case of leaks of fluid from a pressurized container.

Advantageously, the present device furthermore eliminates various problems, in addition to those already observed, for adjustment cocks applied on containers of pressurized fluids.

The device thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Automatic flow limiting device particularly for containers of pressurized fluids, characterized in that it comprises cutoff means (6) which are connected monolithically, by means of extendable flaps (1,2), to locking means (8) for locking said device to a fluid inflow port (3) defined on a manual stopcock (4), said cutoff and locking means being fixed to said cock by means of a fixing ring (5) or of another suitable means.

2. Device according to claim 1, characterized in that said cutoff means comprise a disk (6) whose diameter is greater than the diameter of an internal duct (7) of said fluid inflow port.

3. Device according to the preceding claims, characterized in that said locking means comprise a locking ring (8) from whose internal perimeter said flaps (1,2) for connection to said disk protrude.

4. Device according to one or more of the preceding claims, characterized in that said disk (6) and said locking ring (8) are co-planar in their idle position.

5. Device according to one or more of the preceding claims, characterized in that said fixing ring (5) supports said locking ring (8) in said inflow port (3) of said cock and is fixed thereto by bending edges of said inflow port.

6. Device according to one or more of the preceding claims, characterized in that fluid bleeding means (10;11) are defined in said disk (6), said bleeding means being suitable, in the closure position of said disk, for rebalancing the pressure between the inside of said container and said duct of said inflow port.

7. Device according to claim 6, characterized in that said bleeding means comprise a through hole (10) defined in said disk.

8. Device according to claim 6, characterized in that said bleeding means comprise a recess (11) which connects said inner duct to said container and is defined on a portion of said disk which abuts against said inner duct.

9. Device according to one or more of the preceding claims, characterized in that said disk has guiding means (12;14) suitable for guiding said disk along preset paths.

10. Device according to claim 9, characterized in that said guiding means comprise a first cylinder (12) which protrudes from said disk and passes through an opening (13) defined in said fixing ring.

11. Device according to claim 9, characterized in that said guiding means comprise a second cylinder (14) which protrudes from said disk and partially loosely enters said inner duct (7).
